# EUROPÄISCHE PATENTANMELDUNG

(11) **EP 1 122 142 A1**
(43) Veröffentlichungstag der Anmeldung: **08.08.2001**
(21) Anmeldenummer: 01100147.6
(22) Anmeldetag: 16.01.2001
(51) Int. Cl.: B60T 15/24, B60T 17/18, B60T 13/66

(54) **Bremsanlage für Fahrzeuge, insbesondere Nutzfahrzeuge**

(30) Priorität: 31.01.2000 DE 10004086
(71) Anmelder: KNORR-BREMSE Systeme für Nutzfahrzeuge GmbH, 80809 München (DE)
(72) Erfinder: Stumpe, Werner, 70374 Stuttgart (DE)

(57) **Zusammenfassung**

Die Bremsanlage weist einen Vorderachs- und einen Hinterachsbetriebskreis auf, die jeweils von separaten Vorratsdruckbehältern (2-4) mit Bremsdruck versorgt werden, wobei der Vorderachsbremskreis für Notfälle zusätzlich einen separaten dritten Vorratsdruckbehälter (4) aufweist. Der Vorderachsbremskreis weist zwei elektronisch angesteuerte Druckregelmodule (29, 35) auf, die jeweils einer der beiden Vorderradbremsen (31, 37) zugeordnet sind. Bei ordnungsgemäßer Funktionsweise der Bremsanlage gelangt Vorratsdruck von dem einen Vorratsdruckbehälter (3) der Vorderachse zum ersten Druckregelmodul (29) und über ein elektrisch ansteuerbares Umschaltventil (33) zum zweiten Druckregelmodul (35). Bei einem teilweisen pneumatischen Ausfall des Vorderachsbremskreises, bei dem kein bzw. nur ein geringer Bremsdruck aufgebaut wird, schaltet das Umschaltventil (33) in eine Not- bzw. Teststellung, in der zumindest eines der beiden Druckregelmodule (29, 35) der Vorderachse von dem dritten Vorratsdruckbehälter (4) versorgt wird (Fig. 1).

## Beschreibung

Die vorliegende Erfindung betrifft eine Bremsanlage für Fahrzeuge, insbesondere für Nutzfahrzeuge, gemäß dem Oberbegriff des Patentanspruches 1.

Eine derartige Bremsanlage ist aus der DE 195 04 394 C1 bekannt. Dort ist eine Bremsanlage mit einem Vorderachsbremskreis und einem Hinterachsbremskreis beschrieben. Der Vorderachsbremskreis weist ein erstes und ein zweites Steuerventil auf, die bei ordnungsgemäßer Funktionsweise von einem Druckluftbehälter für die Vorderachse mit Druckluft versorgt werden und über Steuerleitungen vom Fußbremsventil des Fahrers angesteuert werden. Jedem der beiden Steuerventile ist ein Bremszylinder zugeordnet. Das erste Steuerventil weist einen zweiten Versorgungsanschluß auf, der mit einem zweiten Druckluftbehälter verbunden ist. Tritt im Vorderachsbremskreis, d.h. in der Verbindung zwischen dem ersten Druckluftbehälter und den beiden Steuerventilen ein Leck auf, so wird das erste Steuerventil von dem zweiten Druckluftbehälter mit Druckluft versorgt, so daß zumindest das dem ersten Steuerventil zugeordnete Vorderrad weiterhin gebremst werden kann.

Aus der DE 195 04 393.C1 ist eine sehr ähnliche Bremsanlage bekannt. Um bei einem Leck im Vorderachsbremskreis zu verhindern, daß gleichzeitig beide Bremszylinder drucklos werden, ist dort eine Steuerventileinrichtung vorgesehen, die zwischen dem Druckmittelausgang einer diesen beiden Bremszylindern zugeordneten Steuerventileinrichtung und einem der beiden Bremszylinder angeordnet ist. Über die Steuerventileinrichtung ist der eine Bremszylinder in Abhängigkeit von einem einem anderen Bremskreis zugeordneten Steuersignal mit einer von der Druckmittelquelle des Hinterachsbremskreises unabhängigen Druckmittelquelle verbindbar.

Die DE 195 14 603 C2 beschreibt eine Bremsanlage mit einem Vorderachs- und einem Hinterachsbremskreis, die bei intakter Bremsanlage durch zugeordnete voneinander getrennte Druckmittelbehälter mit Bremsdruck versorgt werden. Bei Betätigen des Fußbremsventils gelangt Bremsdruck vom Druckbehälter für die Vorderachse zu einem Relaisventil und von dort zur linken Vorderradbremse und über ein elektrisch betätigbares Umschaltventil zur rechten Vorderradbremse. Bei einem Leck im Vorderachsbremskreis schaltet das Umschaltventil um. Dies hat zur Folge, daß sich der dem Hinterachsbremskreis zugeordnete Druckluftbehälter über das Leck entleeren kann, d.h. daß auch der Hinterachsbremskreis ausfällt. Dies wird jedoch in Kauf genommen, da der linke Vorderradbremszylinder mittels des Fußbremsventils und des Relaisventils mit Bremsdruck versorgbar bleibt und eine gewisse Restbremswirkung erhalten bleibt.

Aus der DE 195 45 640 A1 ist ferner eine Steuerventileinrichtung bekannt, die bei den oben genannten Bremsanlagen einsetzbar ist.

Bei Fahrzeugen mit einem großen Achslastverhältnis Vorderachse/Hinterachse, d.h. bei stark belasteter Vorderachse und gering belasteter Hinterachse, wie z.B. bei einer Sattelzugmaschine, an die kein Auflieger angehängt ist, tritt das Problem auf, daß bei einem Ausfall des Vorderachsbremskreises mit den Hinterachsbremsen allein die vorgeschriebene Hilfsbremswirkung nicht erreicht werden kann.

Aufgabe der Erfindung ist es, eine verbesserte Bremsanlage zu schaffen, die bei einem pneumatischen Teilausfall des Vorderachsbremskreises eine ausreichende Bremswirkung ermöglicht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Bremsanlage mit einem Vorderachs- und einem Hinterachsbetriebsbremskreis, die jeweils von separaten Vorratsdruckbehältern mit Bremsdruck versorgt werden, wobei der Vorderachsbremskreis für Notfälle zusätzlich einen separaten dritten Vorratsdruckbehälter aufweist, der gegenüber den anderen beiden Vorratsdruckbehältern abgesichert ist. Der Vorderachsbremskreis weist zwei elektronisch angesteuerte Druckregelmodule auf, die jeweils einer der beiden Vorderradbremsen zugeordnet sind und dort den Bremsdruck regeln. Im Normalbetrieb, d.h. bei ordnungsgemäßer Funktionsweise der Bremsanlage, gelangt Vorratsdruck von dem einen Vorratsdruckbehälter der Vorderachse zum ersten Druckregelmodul und über ein elektrisch ansteuerbares Umschaltventil zum zweiten Druckregelmodul. Bei einem teilweisen pneumatischen Ausfall des Vorderachsbremskreises, bei dem z.B. im Vorratsdruckbehälter, in der pneumatischen Leitung zum ersten Druckregelmodul oder in der pneumatischen Leitung zum Umschaltventil ein Leck auftritt und kein bzw. nur ein geringer Bremsdruck aufgebaut wird, schaltet das Umschaltventil in eine Not- bzw. Teststellung, in der zumindest eines der beiden Druckregelmodule der Vorderachse von dem dritten Vorratsdruckbehälter versorgt wird. Die Betätigung des Umschaltventils erfolgt im Störungsfall automatisch durch eine elektronische Steuervorrichtung und kann zu Testzwecken auch durch den Fahrer erfolgen.

Mit der Erfindung können bei einem pneumatischen Teilausfall des Vorderachsbremskreises die Hinterradbremsen und durch "elektrische Vorratsumschaltung" zumindest eine der beiden Vorderradbremsen weiterhin elektrisch geregelt werden, so daß eine ausreichende Notbremswirkung erreicht wird.

Im Normalbetrieb gibt der Fahrer über ein Fußbremsventil ein Bremsanforderungssignal vor, das der elektronischen Steuereinrichtung zugeführt wird. In Abhängigkeit des Bremsanforderungssignals steuert die elektronische Steuereinrichtung die beiden einkanaligen Druckregelmodule an der Vorderachse, die z.B. herkömmliche ABS-Ventile sein können. An der Hinterachse des Fahrzeugs kann ein zweikanaliges ebenfalls durch die elektronische Steuereinrichtung angesteuertes Druckregelmodul vorgesehen sein, das vom Vorratsdruckbehälter für die Hinterachse versorgt wird und an das Federspeicherbremszylinder der Hinterachse angeschlossen sind.

Eine Störung im Vorderachsbremskreis kann z.B. an der Höhe des für die normale Betriebsbremsung vorhandenen Vorratsbehälterdrucks bzw. des vorhandenen Leitungsdrucks erkannt werden. Hierfür kann ein Drucksensor bzw. ein Druckschalter vorgesehen sein, der ein dem gemessenen Druck entsprechendes elektrisches Überwachungssignal an die elektronische Steuereinrichtung liefert. Alternativ oder ergänzend dazu können auch in die Druckregelmodule der Vorderachse integrierte Drucksensoren verwendet werden, welche die Höhe des bei einer Bremsanforderung tatsächlich in die Bremszylinder eingesteuerten Bremsdrucks messen.

Alternativ oder ergänzend dazu kann ein Druckausfall während eines Bremsvorganges auch anhand des Raddrehzahlverhaltens der Vorderräder erkannt werden, wobei die bei modernen Fahrzeugen ohnehin vorhandenen Raddrehzahlsensoren des ABS-Systems verwendet werden können. Liegt eine Bremsanforderung des Fahrers vor und werden die Vorderräder zu schwach gebremst, so erkennt die elektronische Steuereinrichtung dies als "pneumatischen Teilausfall" des Vorderachsbremskreises und schaltet das Umschaltventil in seine "Notfall bzw. Teststellung".

Im folgenden wird die Erfindung im Zusammenhang mit der Zeichnung näher erläutert.
Fig. 1 ein Schaltschema einer elektro-pneumatischen Betriebsbremsanlage; und
Fig. 2 eine Detaildarstellung des Umschaltventils.

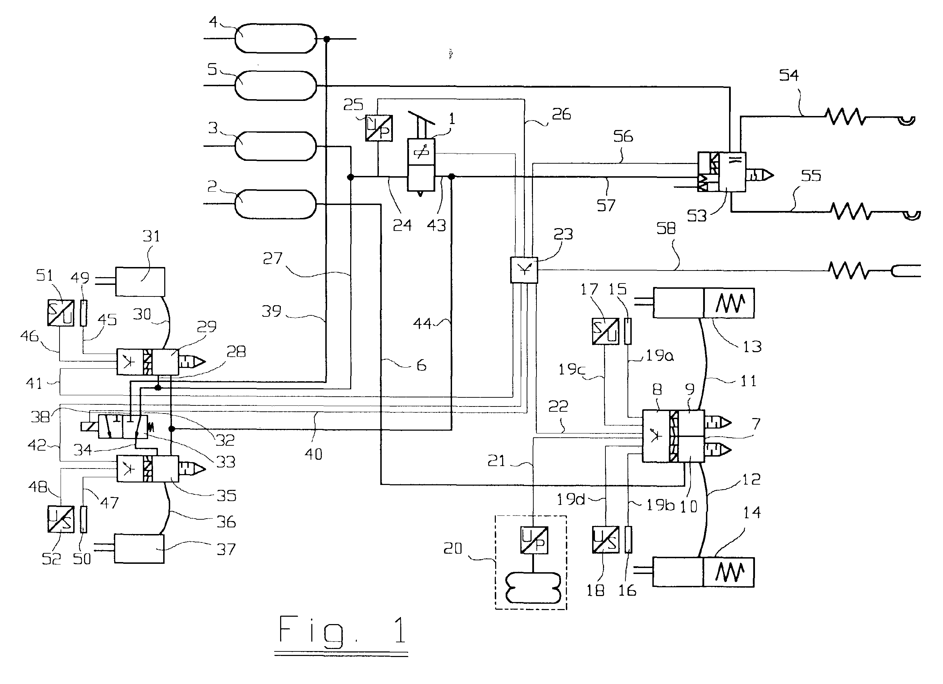

Fig. 1 zeigt ein Schaltschema einer elektro-pneumatischen Betriebsbremsanlage mit einem Fußbremsventil 1, einem ersten Vorratsdruckbehälter 2 zur Versorgung des Hinterachsbremskreises, einem zweiten Vorratsdruckbehälter 3 zur Versorgung des Vorderachsbremskreises im Normalbetrieb, einem dritten Vorratsdruckbehälter 4, der als Speicher für die Notbremseinrichtung an der Vorderachse dient, und einem vierten Vorratsdruckbehälter 5. Die Luftbeschaffung, Luftaufbereitung und die Absicherung ist wie gesetzlich vorgeschrieben ausgeführt, hier jedoch nicht näher dargestellt.

Der zur Versorgung eines Hinterachsbremskreises vorgesehene Vorratsdruckbehälter 2 ist über eine pneumatische Leitung 6 mit einem zweikanaligen Druckregelmodul 7 verbunden. Das zweikanalige Druckregelmodul 7 weist einen elektronischen Steuer/Sensorteil 8 und zwei pneumatische Teile 9 bzw. 10 auf, die über Bremsleitungen 11, 12 mit Federspeicherbremszylindern 13 bzw. 14 an der Fahrzeughinterachse verbunden sind.

An den Hinterrädern des Fahrzeugs (nicht dargestellt) sind jeweils ein Raddrehzahlsensor 15 bzw. 16 sowie ein Bremsbelagverschleißsensor 17 bzw. 18 vorgesehen. Die Sensoren 15-18 wandeln die gemessenen Raddrehzahl- bzw. Wegsignale in elektrische Signale um und führen sie dem zweikanaligen Druckregelmodul 7 über zugeordnete elektrische Leitungen 19a-19d zu. Ferner ist ein Lastsensor 20 vorgesehen, der dem Druckregelmodul 7 ein der Hinterachsbelastung entsprechendes elektrisches Signal über eine elektrische Leitung 21 zuführt. Weiter ist das Druckregelmodul 7 über eine elektrische Leitung 22 mit einer zentralen elektronischen Steuervorrichtung 23 verbunden.

Der zweite Vorratsdruckbehälter 3 ist mit einem pneumatischen Eingang 24 des Fußbremsventils 1 verbunden. Der im zweiten Vorratsdruckbehälter 3 bzw. am pneumatischen Eingang 24 herrschende Druck wird von einem Drucksensor 25 in ein elektrisches Signal umgewandelt, das über eine elektrische Leitung 26 der zentralen Steuervorrichtung 23 zugeführt wird.

Der zweite Vorratsdruckbehälter 3 ist ferner über eine pneumatische Leitung 27 mit einem Versorgungseingang 28 eines ersten Druckregelmoduls 29 der Vorderachse verbunden, das über eine Bremsleitung 30 einen ersten Bremszylinder 31 der Vorderachse mit Druck beaufschlägt. Ferner ist der zweite Vorratsdruckbehälter 3 mit einem ersten Eingang 32 eines Umschaltventils 33 verbunden, das hier ein 3/2-Magnetventil ist. In der gezeigten Grundstellung, die einer ordnungsgemäß funktionierenden Brmesanlage entspricht, ist der erste Eingang 32 des Magnetventils 33 durchgeschaltet, d.h. der vom ersten Vorratsdruckbehälter 3 gelieferte Vorratsdruck wird zu einem Ausgang 34 des Umschaltventils 33 und von dort zu einem zweiten Druckregelmodul 35 durchgeschaltet, das über eine Bremsleitung 36 einen zweiten Bremszylinder 37 mit Druck beaufschlägt.

Ein zweiter Eingang 38 des Umschaltventils 33 ist über eine pneumatische Leitung 39 ständig mit dem dritten Vorratsdruckbehälter 4 verbunden. Alternativ dazu kann der zweite Eingang 38 des Umschaltventils 33 auch an den vierten Vorratsdruckbehälter 5 angeschlossen sein, der hier für ein Anhängerfahrzeug bzw. einen Feststellbremskreis (nicht dargestellt) vorgesehen ist. In der gezeigten Grundstellung ist der zweite Eingang 38 gegenüber dem Ausgang 34 abgesperrt.

In einer zweiten Stellung des Umschaltventils 33, die als "Not- bzw. Teststellung" bezeichnet wird, ist der zweite Eingang 38 zum Ausgang 34 durchgeschaltet und der erste Eingang 32 abgesperrt. Das Umschaltventil 33 wird über eine elektrische Steuerleitung 40 von der elektrischen Steuervorrichtung 23 angesteuert. Die beiden Druckregelmodule 29 und 35 sind ebenfalls über elektrische Steuerleitungen 41, 42 mit der Steuervorrichtung 23 verbunden und werden im Normalbetrieb elektrisch angesteuert. Aus Sicherheitsgründen ist jedoch auch eine pneumatische Ansteuerung der beiden Druckregelmodule 29 bzw. 35 vorgesehen, die eine Ansteuerung bei Ausfall der elektronischen Steuervorrichtung 23 ermöglichen soll. Hierzu ist ein pneumatischer Steuerausgang 43 des Fußbremsventils 1 über eine pneumatische Steuerleitung 44 mit entsprechenden Steuereingängen der Druckregelmodule 29 bzw. 35 verbunden.

Die beiden Druckregelmodule 29, 35 sind ferner über zugeordnete elektrische Leitungen 45-48 mit Raddrehzahlsensoren 49 bzw. 50 sowie mit Bremsbelagverschleißsensoren 51 bzw. 52 verbunden.

Vollständigkeitshalber sei noch ein Druckregelmodul 53 erwähnt, das über pneumatische Leitungen 54 und 55 mit einem Anhängerfahrzeug (nicht dargestellt) verbindbar ist. Das Druckregelmodul 53 wird vom vierten Vorratsdruckbehälter 5 mit Vorratsdruck beaufschlagt, der als Puffer für die Versorgung einer Bremsanlage auf dem Anhängerfahrzeug vorgesehen ist. An den Vorratsdruckbehälter 5 kann auch die Betätigungseinrichtung für die Feststellbremsanlage (nicht dargestellt) angeschlossen sein.

Im Normalbetrieb wird das Druckregelmodul 53 über eine elektrische Steuerleitung 56 von der elektronischen Steuervorrichtung 23 angesteuert. Aus Sicherheitsgründen ist auch hier vorgesehen, daß das Druckregelmodul über eine pneumatische Steuerleitung 57 vom Fußbremsventil 1 ansteuerbar ist. Schließlich ist noch eine elektrische Steuerleitung 58 vorgesehen, die eine elektrische Verbindung zwischen der elektronischen Steuervorrichtung 23 und einem Anhängerfahrzeug ermöglicht.

Bei ordnungsgemäßer Funktionsweise der Bremsanlage wird der elektronischen Steuervorrichtung 23 über einen elektrischen Geber des Fußbremsventils 1 ein Bremsanforderungssignal zugeführt. Die Steuervorrichtung 23 steuert daraufhin die Druckregelmodule 29 und 35 an der Vorderachse und das Druckregelmodul 7 an der Hinterachse. Bei einer normalen Betriebsbremsung regeln die Druckregelmodule 7, 29 bzw. 35 entsprechend der Vorgabe einen Bremsdruck zu den Bremszylindern 13, 14, 31 bzw. 37 aus dem Vorratsdruckbehälter 1 bzw. 3 des jeweiligen Bremskreises ein. Der pneumatische Teil des Fußbremsventils 1 gibt ebenfalls einen Steuerdruck über die pneumatische Steuerleitung 44 zu den Druckregelmodulen 29 bzw. 35 der Vorderachse aus, wobei jedoch im Normalbetrieb die elektrische Ansteuerung Vorrang hat.

Bei einem Ausfall der Elektronik wird über den pneumatischen Betätigungskreis, d.h. über den pneumatischen Teil des Fußbremsventils 1 und die pneumatische Steuerleitung 44 Druckluft aus dem zweiten Vorratsdruckbehälter 3 in die Bremszylinder 31 und 37 der Vorderachse eingesteuert. Dieser pneumatische Steuerkreis bildet den Rückhalt für die elektronische Regelung (Back up-Kreis). Diese über die pneumatische Betätigung der Druckregelmodule 29 bzw. 35 erzeugte Bremswirkung reicht aus, die gesetzlich vorgeschriebene Hilfsbremswirkung zu erzeugen.

Fällt hingegen der zweite Vorratsdruckbehälter 3 des Betriebsbremskreises der Vorderachse aus, dann wird zunächst nur noch an der Hinterachse ein Bremsdruck elektronisch eingeregelt. Bei Fahrzeugen mit einer stark belasteten Vorderachse und einer gering belasteten Hinterachse kann somit aufgrund des begrenzten Haftwertes zwischen Reifen und Straße nur noch eine relativ geringe Bremswirkung über die Hinterachse des Fahrzeuges aufgebracht werden, die nicht ausreicht, die vorgeschriebene Hilfsbremswirkung zu erreichen.

Bei einem pneumatischen Teilausfall der Bremsanlage soll jedoch die elektrische Funktionstüchtigkeit der Bremsanlage möglichst aufrechterhalten werden. Ein elektronischer Regelkreis für die Fahrzeugvorderachse erkennt einen solchen Ausfall des Vorderachsbremskreises. Mittels des Drucksensors 25 oder den in die Druckregelmodule 29, 35 integrierten Brmesdrucksensoren (nicht dargestellt) kann ein solcher Bremsdruckausfall an der Vorderachse sensiert werden. Alternativ oder ergänzend dazu können auch die von den Raddrehzahlsensoren 49 und 50 gelieferten Raddrehzahlsignale der Vorderräder elektronisch ausgewertet werden, was einen Rückschluß auf eine zu geringe Bremswirkung bzw. auf einen Bremsdruckausfall ermöglicht.

Wird ein Bremsdruckausfall erkannt, so wird das Umschaltventil 33 durch die elektronische Steuereinrichtung 23 in seine Notfallstellung umgeschaltet. Das Druckregelmodul 35, das in unmittelbarer Nähe des Bremszylinders 37 angeordnet ist, wird nun vom Vorratsdruckbehälter 4 versorgt, was eine ausreichende Notbremswirkung an der Vorderachse sicherstellt.

Bei dem hier gezeigten Ausführungsbeispiel wird somit wenigstens dem zweiten Druckregelmodul 35 bzw. dem zugeordneten Bremszylinder 37 Vorratsdruck vom dritten Vorratsdruckbehälter 4 zugeführt, der gegen den defekten Vorratsdruckbehälter 3 abgesichert ist. Die elektronische Steuervorrichtung 23, welche das Druckregelmodul 35 steuert, kann daraufhin die Bremswirkung am Bremszylinder 37 erhöhen, so daß die vorgeschriebene Fahrzeugverzögerung erreicht wird.

Alternativ kann auch vorgesehen sein, daß das Umschaltventil 33 beiden Druckregelmodulen 29 bzw. 35 vorgeschaltet ist, d.h. daß beide Druckregelmodule 29 bzw. 35 über das Umschaltventil 33 mit den Vorratsdruckbehältern 3 bzw. 4 verbunden sind. Bei einem pneumatischen Teilausfall des Vorderachsbremskreises können dann beide Druckregelmodule 29 bzw. 35 weiterhin mit Druckluft versorgt werden.

Ferner kann vorgesehen sein, daß das Umschaltventil 33 in regelmäßigen Abständen hinsichtlich seiner Funktionsfähigkeit getestet wird, beispielsweise automatisch bei ausgewählten Bremsungen während eines Einschaltzyklus oder durch ein vom Fahrer erzeugbares Signal.

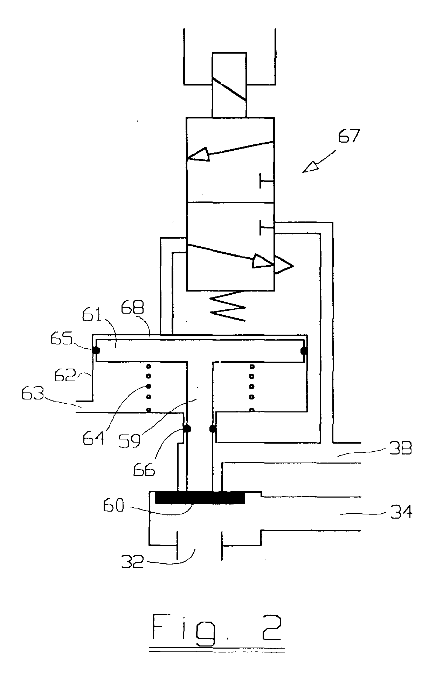

Fig. 2 zeigt Einzelheiten des Umschaltventils 33, das hier als 3/2-Magnetventil dargestellt ist. In der gezeigten Grundstellung (vgl. Fig. 1) steht der erste Eingang 32 mit dem Ausgang 34 in Druckverbindung. Der zweite Eingang 38 ist gegenüber dem Ausgang 34 durch ein durch einen Doppelkolben 59 gebildetes Ventil 60 verschlossen. Der Doppelkolben 59 weist einen zweiten Kolben 61 auf, der sich in einem Zylindergehäuse 62 bewegen kann, welches eine Entlüftung 63 aufweist. Der zweite Kolben 61 ist durch eine Feder 64 vorgespannt und wird in die hier gezeigte Endstellung gedrückt. Zwischen dem zweiten Kolben 61 und dem Zylindergehäuse 62 ist eine Dichtung 65 vorgesehen und der zweite Eingang 38 ist durch eine Dichtung 66 gegenüber dem Zylindergehäuse 62 abgedichtet.

Das Umschaltventil 33 weist ferner ein Magnetventil 67 auf, das in der hier gezeigten Grundstellung einen Zylinderraum 68 des Zylindergehäuses 62 mit Atmosphäre verbindet und den zweiten Eingang 38 gegenüber dem Zylinderraum 68 absperrt. Diese Kombination ist gewählt, um einen ausreichenden Durchlaßquerschnitt für die Druckluft aus den Vorratsdruckbehältern für Normal- und Notbetrieb sicherzustellen. Durch entsprechende Ventilgestaltung wird in der Grundstellung (Normalbetrieb) der Vorrat vom Vorderachsbetriebsbremskreis zum Druckregelmodul gelassen. Wird auf Notbetrieb umgeschaltet, dann leitet das 3/2-Magnetventil Druckluft aus dem Notbremsbehälter, d.h. aus dem Vorratsbehälter 4 auf das pneumatische 3/2-Ventil. Dieses schaltet daraufhin um und Vorrat aus dem Vorratsdruckbehälter 4 wird zum Druckregelmodul 35 bzw. zum Bremszylinder 37 gelassen.

Wird das Magnetventil 67 in der hier gezeigten Stellung betätigt, so ist der zweite Eingang 38 mit dem Zylinderraum 68 verbunden und der Vorratsdruck des dritten Vorratsdruckbehälters 4 (vgl. Fig. 1) drückt den Doppelkolben 59 entgegen der Federkraft nach unten, so daß der erste Eingang 32 geschlossen wird und der zweite Eingang 38 mit dem Ausgang 34 in Druckverbindung steht.

### BEZUGSZEICHENLISTE

- 1: Fußbremsventil
- 2: Erster Vorratsdruckbehälter
- 3: Zweiter Vorratsdruckbehälter
- 4: Dritter Vorratsdruckbehälter
- 5: Vierter Vorratsdruckbehälter
- 6: pneumatische Leitung
- 7: Zweikanaliges Druckregelmodul
- 8: Steuer/Sensorteil
- 9, 10: Pneumatischer Teil
- 11, 12: Bremsleitung
- 13, 14: Federspeicherbremszylinder
- 15, 16: Raddrehzahlsensor
- 17,18: Bremsbelagverschleißsensor
- 19a-19d: elektrische Leitung
- 20: Lastsensor
- 21,22: elektrische Leitung
- 23: Elektronische Steuervorrichtung
- 24: Pneumatischer Eingang
- 25: Drucksensor
- 26: Elektrische Leitung
- 27: Pneumatische Leitung
- 28: Versorgungseingang
- 29: Erstes Druckregelmodul
- 30: Bremsleitung
- 31: Erster Bremszylinder
- 32: Erster Eingang
- 33: Umschaltventil
- 34: Ausgang
- 35: Zweites Druckregelmodul
- 36: Bremsleitung
- 37: Zweiter Bremszylinder
- 38: Zweiter Eingang
- 39: Pneumatische Leitung
- 40,41,42: Elektrische Steuerleitung
- 43.44: Pneumatische Steuerleitung
- 45-48: Elektrische Leitung
- 49,50: Raddrehzahlsensor
- 51,52: Bremsbelagverschleißsensor
- 53: Druckregelmodul
- 54,55: Pneumatische Leitung
- 56: Elektrische Steuerleitung
- 57: Pneumatische Steuerleitung
- 58: Elektrische Steuerleitung
- 59: Doppelkolben
- 60: Ventil
- 61: Zweiter Kolben
- 62: Zylindergehäuse
- 63: Entlüftung
- 64: Feder
- 65,66: Dichtung
- 67: Magnetventil
- 68: Zylinderraum

## Patentansprüche

1. Bremsanlage für Fahrzeuge, insbesondere Nutzfahrzeuge mit
a) einem Betriebsbremswertgeber, der ein der Bremsanforderung des Fahrers entsprechendes elektrisches Bremssignal erzeugt;
b) einem ersten Vorratsdruckbehälter zur Versorgung von Hinterradbremszylindern mit Bremsdruck;
c) einem zweiten Vorratsdruckbehälter zur Versorgung von Vorderradbremszylindern mit Bremsdruck, der mit einem ersten Eingang eines Umschaltventils verbunden ist, das einem der beiden Vorderradbremszylindern zugeordnet ist;
d) einem dritten Vorratsdruckbehälter, der mit dem zweiten Eingang des Umschaltventils verbunden ist,
**dadurch gekennzeichnet,**
e) daß den Vorderradbremszylindern (31, 37) ein erstes bzw. ein zweites Druckregelmodul (29, 35) vorgeschaltet ist;
f) daß eine mit dem Betriebsbremswertgeber (1) verbundene elektrische Steuervorrichtung (23) vorgesehen ist, welche die Druckregelmodule (7, 29, 35) entsprechend dem Bremssignal elektrisch ansteuert;
g) daß der zweite Vorratsdruckbehälter (3) mit einem Versorgungseingang (28) des ersten Druckregelmoduls (29) verbunden ist;
h) daß in einer Normalbetriebsstellung des Umschaltventils (33) der zweite Eingang (38) des Umschaltventils (33) abgesperrt und der erste Eingang (32) mit dem zweiten Druckregelmodul (35) in Verbindung steht;
i) daß in einer Not- bzw. Teststellung des Umschaltventils (33) der zweite Eingang (38) des Umschaltventils (33) mit dem zweiten Druck-² regelmodul (35) in Verbindung steht und der erste Eingang (32) abgesperrt ist; und
j) daß das Umschaltventil (33) durch die elektronische Steuervorrichtung (23) betätigbar ist.

2. Bremsanlage nach Anspruch 1,
**dadurch gekennzeichnet,**
daß ein Drucksensor (25) bzw. ein Druckschalter vorgesehen ist, der einen Druckausfall im zweiten Vorratsdruckbehälter (3) bzw. in einer daran angeschlossenen pneumatischen Leitung (27) detektiert und ein entsprechendes elektrisches Warnsignal zur Betätigung des Umschaltventils (33) an die elektronische Steuervorrichtung (23) liefert.

3. Bremsanlage nach einem der Ansprüche 1 oder 2,
**dadurch gekennzeichnet,**
daß die Druckregelmodule (29, 35) der Vorderachse jeweils einen Drucksensor aufweisen, die bei Vorliegen einer Bremsanforderung den in die Bremszylinder (31, 37) eingesteuerten Bremsdrücke detektieren und entsprechende elektrische Signale der elektronischen Steuervorrichtung (23) zuführen zur Betätigung des Umschaltventils (33), wenn eine Auswertung der Bremsanforderung und des detektierten Bremsdrucksignales einen Druckausfall erkennt.

4. Bremsanlage nach einem der Ansprüche 1 bis 3,
**dadurch gekennzeichnet,**
daß mindestens an einem Vorderrad ein Raddrehzahlsensor (49, 50) vorgesehen ist, der mit der elektronischen Steuervorrichtung (23) verbunden ist, wobei die Steuervorrichtung (23) aus den Raddrehzahlsignalen die Verzögerung des Vorderrdes ermittelt und bei einer in Abhängigkeit von der Bremsanforderung des Fahrers zu geringen Verzögerung das Umschaltventil (33) betätigt.

5. Vorrichtung nach einem der Ansprüche 1 bis 4,
**dadurch gekennzeichnet,**
daß das Umschaltventil (33) ein 3/2-Magnetventil ist.

6. Bremsanlage nach einem der Ansprüche 1 bis 5,
**dadurch gekennzeichnet,**
daß Steuereingänge der beiden Druckregelmodule (29, 35) der Vorderachse über eine pneumatische Steuerleitung (44) mit einem pneumatischen Steuerausgang (43) des Betriebsbremswertgebers (1) verbunden sind und daß ein pneumatischer Eingang (24) des Betriebsbremswertgebers (1) mit dem zweiten Vorratsdruckbehälter (3) verbunden ist.
